# EUROPEAN PATENT APPLICATION

(11) **EP 1 256 301 A2**
(43) Date of publication of application: **13.11.2002**
(21) Application number: 02425112.6
(22) Date of filing: 28.02.2002
(51) Int. Cl.: A47J 37/04

(54) **Spit featuring a disc equipped with vertical hooks**

(30) Priority: 01.03.2001 IT TV010019 U
(71) Applicant: Cavarzan, Ivan, Castelfranco Veneto (TV) (IT)
(72) Inventor: Cavarzan, Ivan, Castelfranco Veneto (TV) (IT)

(57) **Abstract**

This invention consists of a vertically-positioned spit for cooking either portions or an entire piece of meat. The meat is attached to hooks situated on two side-by-said discs, the first rigid and the second self-propelled, both set on a metal framework equipped with a mechanism (motor reducer) to control the action of the moving disc. This disc moves in a cyclical rotating fashion in a clockwise and counter-clockwise direction at a distance from the fire below that varies depending on the size and type of meat being cooked.

## Description

The cooking method for which patent protection is required brings to the device under consideration here a particular benefit in terms of achieving the desired end result (uniform cooking of the meat) as well as in terms of space (including the possibility of using the same amount of available space to cook a larger quantity of meat).

At the present time, cooking of this type involves a horizontal spit -in other words, the meat (chicken, duck, pieces of beef, portions of veal, etc.) is first cut and prepared and then threaded onto a spit and set horizontally over the fire below.

This invention, instead, is based on a method for cooking the meat vertically: even when entire pieces are being used, the meat is placed on hooks set on a rotating device. More specifically, the device in question is a metal framework on which there is arranged a first upper disc made of aluminium and a second self-propelled lower disc set on three (3) or four (4) spokes; the rotation of the latter disc is governed by a motor reducer that makes possible a cyclical movement in both an clockwise and counter-clockwise direction (as is better demonstrated by the illustrations enclosed). Three (3) or four (4) hooks may be used for each disc, depending on the type of meat being cooked. For such meats as sausage and fowl (usually cooked only by grilling) which are light in weight, four (4) hooks are used, whereas for chicken, duck, pieces of beef and the like three (3) hooks are used. The average weight capacity of each disc is about ten (10) kilograms, and the distance of the meat from the flame may vary inasmuch as said distance depends on the size and type of meat one intends to cook. In order to obtain the best possible cooking result, it is thus possible to easily regulate the distance either through the height of the structural framework itself or the length of the hooks. This device makes it possible to cook, even with whole pieces and in the same amount of space, a larger amount of meat (a fact made obvious by the illustrations which accompany this patent application). This cooking method also makes it possible to increase the benefits of heat rising from the adjacent flame, heat that often spreads out and is dispersed upward without being exploited effectively. With the device shown herein, meat cooks in a uniform manner: in other words, proper cooking is obtained both on the internal and external portions of the meat, thus avoiding an overcooking of the surface in order to cook the interior correctly and at the correct temperature (as occurs instead with a horizontal spit). Of significant import, too, is the hygienic aspect of the cooking process, since the meat is actually cut only after being cooked and there is no need for the preparation generally required when using a horizontal spit (in which the meat is handled and worked on before being cooked).

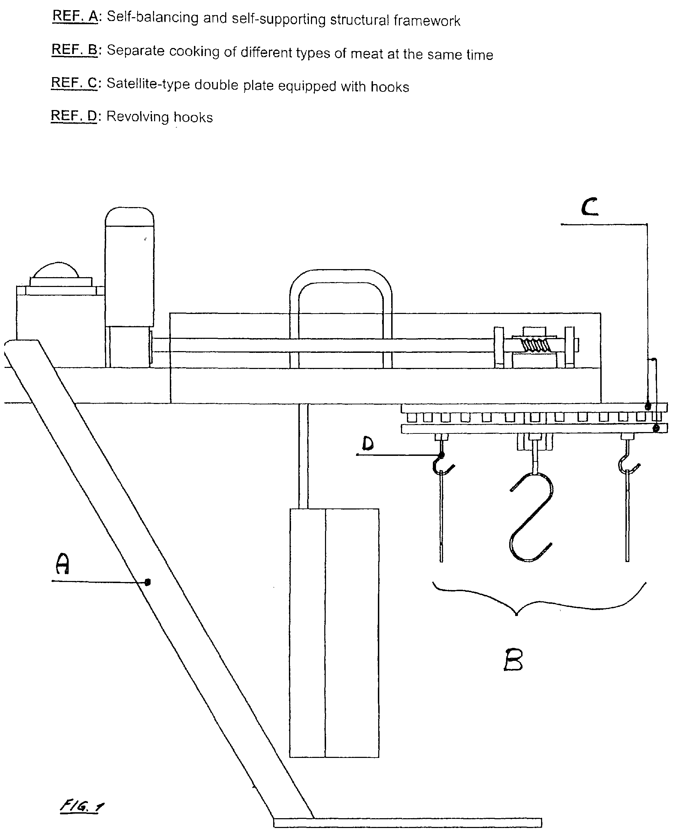

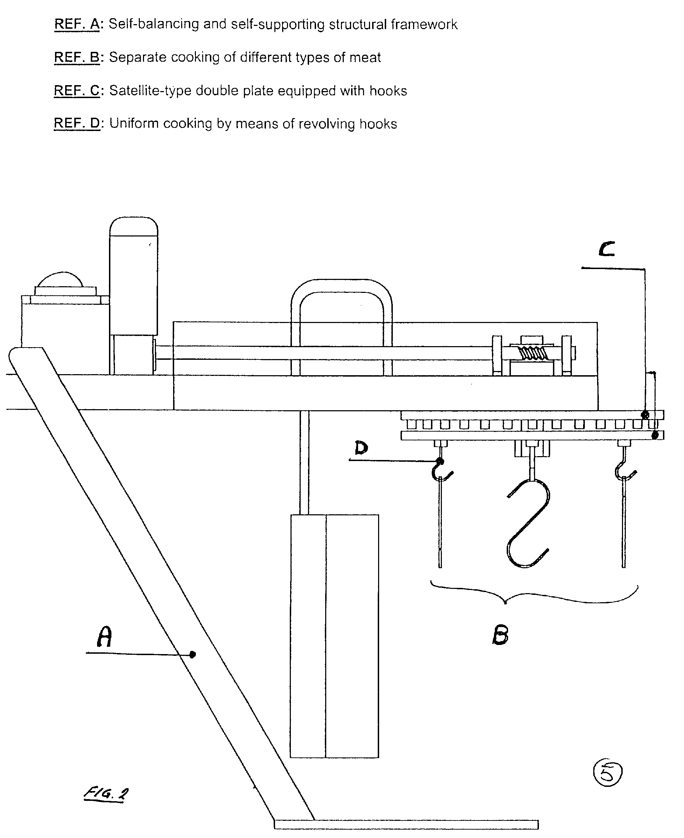

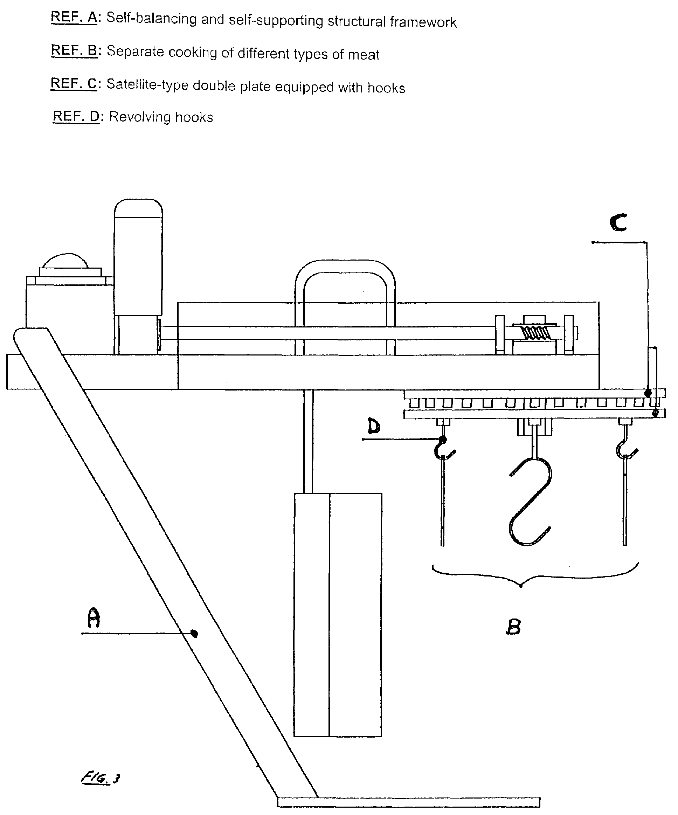

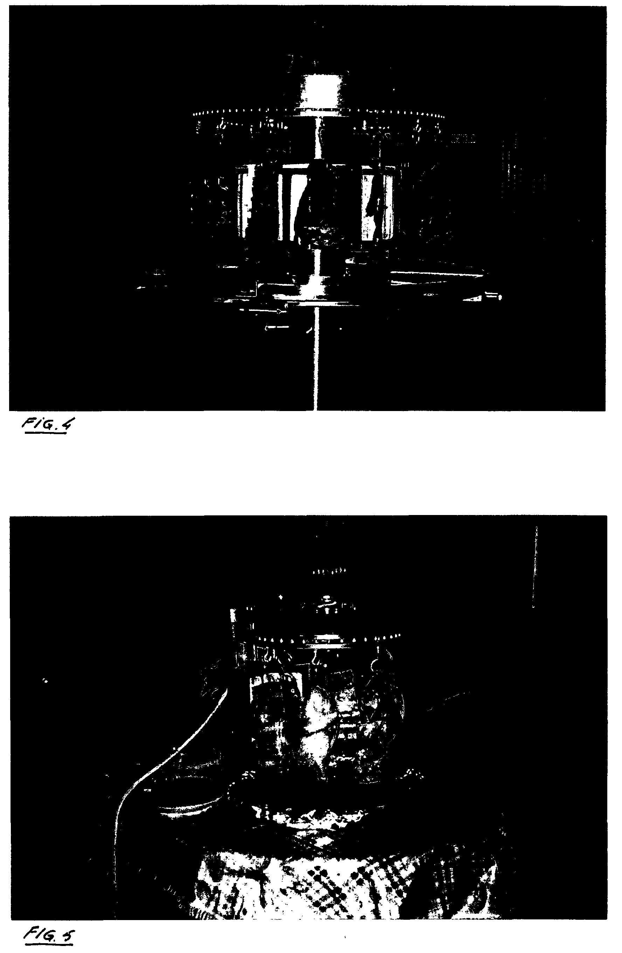

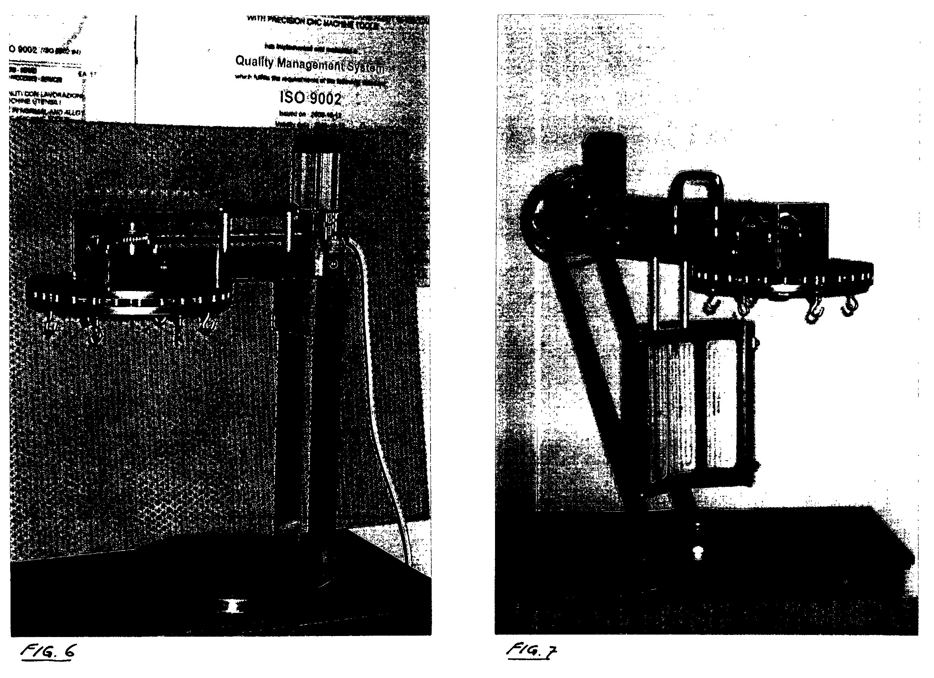

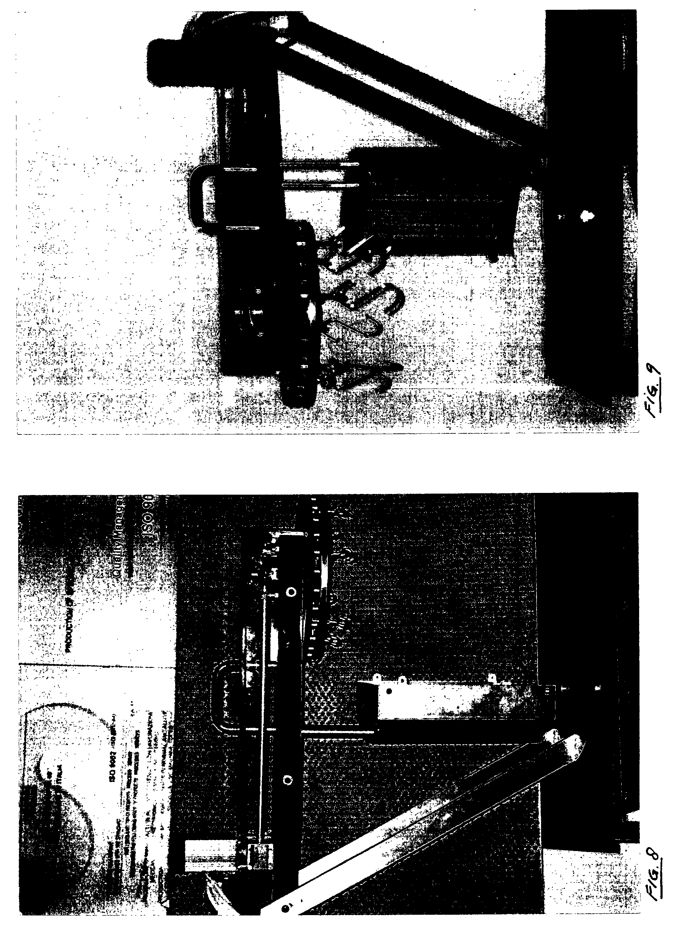

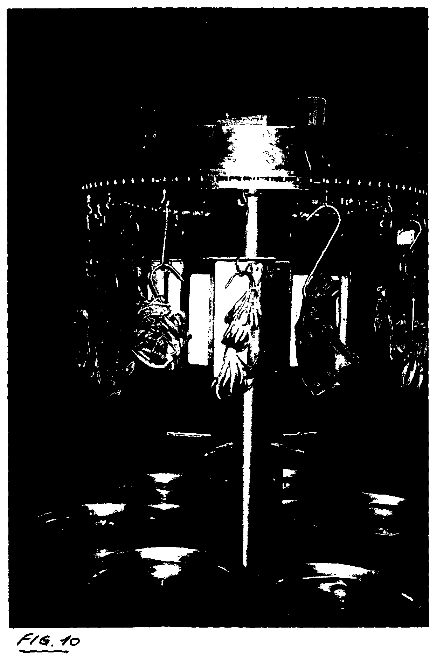

## Claims

1. Rotating spit featuring a disc equipped with vertical hooks, **characterised by** gearing in the vertical axis supplied by a disco having spokes and hooks (made for the attaching of meat) activated by a tangent screw system controlled by a motor reducer;

2. Rotating disc featuring a disc equipped with vertical hooks, **characterised by** a self-balancing and self-supporting structural framework;

3. Rotating spit featuring a disc equipped with vertical hooks, **characterised by** a satellite-type double plate bearing hooks;

4. Rotating spit featuring a disc equipped with vertical hooks and making use of revolving hooks.
